# EUROPEAN PATENT SPECIFICATION

(11) **EP 2 644 254 B1**
(45) Date of publication and mention of the grant of the patent: **17.08.2016**
(21) Application number: 12162726.9
(22) Date of filing: 30.03.2012
(51) Int. Cl.: B01D 53/14

(54) **Scrubber for cleaning a process gas and recovering heat**
Wäscher zur Reinigung eines Prozessgases und Wärmerückgewinnung
Épurateur pour nettoyer un gaz de traitement et récupérer la chaleur

(43) Date of publication of application: 02.10.2013
(73) Proprietor: General Electric Technology GmbH, 5400 Baden (CH)
(72) Inventor: Odenmo, Peter Hans, 352 55 Växjö (SE); Persson, Daniel Per Niklas, 352 63 Växjö (SE)
(74) Representative: General Electric Technology GmbH

(56) References cited:
- WO-A1-2010/102877
- WO-A1-2011/105120
- US-A- 3 638 708
- US-A- 3 733 777
- US-A- 3 957 951
- US-A1- 2003 045 756
- US-A1- 2011 041 685
- US-B1- 6 645 446

## Description

### Field of the Invention

The present disclosure relates to a wet scrubber for removing gaseous pollutants from a process gas. The present disclosure also relates to a method of removing gaseous pollutants from a process gas.

### Background Art

When separating gaseous pollutants from process gases, such as flue gases from, for example, a waste incineration plant, incinerating household and/or industrial waste, a coal- or oil-fired fired power plant, and/or a biofuel fired boiler, a method is frequently used, in which the flue gases are brought into contact with liquid in a wet scrubber to remove gaseous pollutants.

An example of a wet scrubber is disclosed in US 4,340,572. The wet scrubber disclosed in US 4,340,572 serves to both remove gaseous pollutants from the flue gas, and recovering heat from the flue gas.

US 3,733,777 describes a device for removing and recovering sulphur dioxide from a flue gas comprising a cross flow dual packed bed heat
exchanger cooler and precleaner, an absorber heat exchanger unit, and a desorption heat exchanger.

US 3,638,708 describes a system for removing chemicals, such as sulphur dioxide, from a flue gas, and for recovering heat from flue gas. Various alkaline substances are mentioned, including sodium hydroxide, NaOH. The purpose of the scrubbing system is to evaporate a feed stream from 10% concentration to 30 % concentration by using the feed stream in a wet scrubber, and by recovering and using heat from a flue gas that is treated in the wet scrubber.

US 3,957,951 describes a scrubber for cleaning a gas generated in the burning of concentrated ammonia-base sulfite liquor. According to one example the gas cleaning system comprises a quench and a flue gas scrubber. The scrubber comprises a lower cooling zone, an upper cooling zone, a lower absorption zone, and an upper absorption zone. The absorbent utilized in the scrubber is based on ammonium sulfite and ammonium sulfate.

US 3,957,951 describes a scrubber for cleaning a gas generated in the burning of concentrated ammonia-base sulfite liquor. According to one example the gas cleaning system comprises a quench and a flue gas scrubber. The scrubber comprises a lower cooling zone, an upper cooling zone, a lower absorption zone, and an upper absorption zone. The absorbent utilized in the scrubber is based on ammonium sulfite and ammonium sulfate.

WO 2010/102877 A1 discloses a method and plant for amine emission control. US 2011/0041685 A1 discloses a CO₂ recovery apparatus, wherein
US 2003/0045756 A1 discloses an amine recovery method and apparatus. WO 2011/105120 A1 also discloses a CO₂ recovery device.

### Summary of the Invention

The object of the present disclosure is to provide a method of cleaning a gas and recovering heat in a wet scrubber in a manner more efficient than that of the prior art.

This object is achieved by a method for capturing gaseous pollutants and recovering heat from a process gas stream containing water vapor in a wet scrubber according to claim 1.

WO 2010/102877 A1 discloses a method and plant for amine emission control. US 2011/0041685 A1 discloses a CO₂ recovery apparatus, wherein US 2003/0045756 A1 discloses an amine recovery method and apparatus. WO 2011/105120 A1 also discloses a CO₂ recovery device.

### Summary of the Invention

The object of the present disclosure is to provide a method of cleaning a gas and recovering heat in a wet scrubber in a manner more efficient than that of the prior art.

This object is achieved by a method for capturing gaseous pollutants and recovering heat from a process gas stream containing water vapor in a wet scrubber according to claim 1.

An advantage of this method is that cleaning and recovering heat is achieved in a very efficient manner with respect to investment and operating costs.

A further object of the present disclosure is to provide a wet scrubber which is more efficient in cleaning a process gas, and which allows recovering heat of the flue gas.

This object is achieved by means of a wet scrubber for capturing gaseous pollutants and recovering heat from a process gas stream containing water vapor according to claim 4.

An advantage of this wet scrubber is that the investment cost becomes lower, compared to the scrubber of the prior art.

According to one embodiment, the inlet further comprises a horizontal inlet duct. The horizontal duct requires a limited space.

According to one embodiment the horizontal inlet duct has an upper wall, and a lower wall, wherein the upper wall connects to the wet scrubber tower in a point which is located a vertical distance (VD) of less than 50 cm below an underside of the packing of the scrubbing stage. An advantage of this embodiment is that the process gas stream is well distributed inside the wet scrubber tower using the structured packing which is also utilized for bringing the scrubbing liquid into contact with the flue gas. This reduces the need for any additional gas distribution devices, which reduces the investment cost and the height of the wet scrubber tower.

According to one embodiment the vertical distance (VD) between the underside of the structured packing and said point is 0 to 30 cm.

According to one embodiment at least one of the scrubbing stage and the condensing stage comprises a liquid drip tube distributor for distributing the scrubbing liquid over the respective structured packing. An advantage of this embodiment is that liquid may be supplied to the structured packing without requiring the high liquid pressures required in spray nozzle based distribution devices.

Further objects and features of the present invention will be apparent from the description and the claims.

### Brief Description of the Drawings

The invention will now be described in more detail by way of exemplary embodiments and with reference to the accompanying drawings.

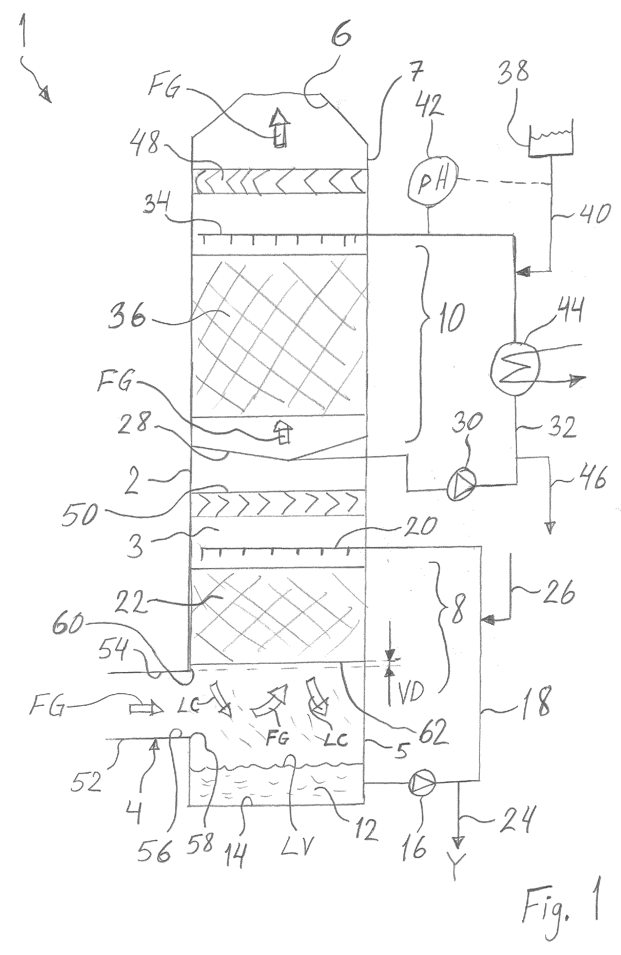

Fig. 1 is a schematic side view of a wet scrubber.

### Description of Preferred Embodiments

Fig. 1 shows schematically a wet scrubber 1. The wet scrubber 1 is adapted for cleaning process gases, for example flue gases from a waste incineration plant, incinerating household and/or industrial waste, a coal- or oil-fired fired power plant, and/or a biofuel fired boiler. The wet scrubber 1 comprises a vertical wet scrubber tower 2, an inlet 4 arranged at a lower end 5 of the wet scrubber tower 2, for flue gases FG to be cleaned, and an outlet 6 arranged at an upper end 7 of the wet scrubber tower 2 for flue gases FG from which at least a portion of the content of gaseous pollutants have been removed.

The wet scrubber 1 has a scrubbing stage 8 and a condensing stage 10 arranged in interior 3 of scrubbing tower 2. The scrubbing stage 8 and the condensing stage 10 are both arranged in the wet scrubbing tower 2, with the condensing stage 10 arranged vertically above the scrubbing stage 8.

The scrubbing stage 8 comprises a tank 12. The tank 12 is arranged in the bottom 14 of the wet scrubber tower 2. A circulation pump 16 is, via a circulation pipe 18, fluidly connected to the tank 12. The circulation pump 16 is arranged to pump scrubbing liquid from the tank 12 to a fluidly connected liquid distributor 20 via the circulation pipe 18. According to one embodiment the liquid distributor 20 is a liquid drip tube distributor. An advantage of such a liquid distributor 20 is that the liquid is supplied at a very low pressure to the liquid distributor 20, which means that the power consumed by the pump 16 is reduced. The liquid is then distributed in the liquid distributor and drips downwards. An example of a useful liquid distributor is the Splash-plate distributor VEP, which is available from Sulzer Chemtech AG, Winterthur, CH.

The liquid distributor 20 distributes the liquid over a packing 22 of the scrubbing stage 8. The packing 22 is a structured packing arranged to provide efficient contact between the flue gas and the liquid. One example of a structured packing is the Mellapak packing, which is available from Sulzer Chemtech AG, Winterthur, CH.

Inside the packing 22 the flue gas, FG forwarded vertically upward through the packing 22 is brought into contact with the liquid. The liquid may typically be water having a pH of about 0.2 to 3, more typically a pH of 0.5 to 2. A liquid of such pH is very efficient to capture, for example, hydrogen chloride, HCl, mercury, Hg, and ammonia, NH₃, from the flue gas FG.

To maintain the pH at a desired level in the scrubbing stage 8 liquid is drained from the scrubbing stage 8 via a drain pipe 24. The drained liquid, containing captured HCl, Hg and NH₃, may be forwarded to a water treatment plant (not shown) for being cleaned. Make up water, which may, for example, be pure process water, or condensate from the condensing stage 10, is supplied to the scrubbing state 8 via a supply pipe 26.

The at least partially cleaned flue gas FG moves vertically upwards from the scrubbing stage 8 and into the condensing stage 10.

The condensing stage 10 comprises a liquid collector 28. The liquid collector 28 is arranged vertically above the scrubbing stage 8. The liquid collector 28 captures liquid coming from above, while allowing the flue gas FG to pass vertically upwards through the liquid collector 28. Examples of useful liquid collectors include the Vane collector SP, and the Chimney tray collector SK, both of which are available from Sulzer Chemtech AG, Winterthur, CH.

A circulation pump 30 is, via a circulation pipe 32, fluidly connected to the liquid collector 28. The circulation pump 30 is arranged to pump condensing liquid from the liquid collector 28 to a fluidly connected liquid distributor 34 via the circulation pipe 32. According to one embodiment the liquid distributor 34 is a liquid drip tube distributor to which the liquid is supplied at a very low pressure, which means that the power consumed by the pump 30 is reduced. The liquid is then distributed in the liquid distributor 34 and drips downwards. An example of a useful liquid distributor 34 is the Splash-plate distributor VEP, which is available from Sulzer Chemtech AG, Winterthur, CH.

The liquid distributor 34 distributes the liquid over a packing 36 of the condensing stage 10. The packing 34 is a structured packing arranged to provide efficient contact between the flue gas and the liquid. One example of a structured packing is the Mellapak packing, which is available from Sulzer Chemtech AG, Winterthur, CH.

Inside the packing 36 the flue gas, FG forwarded vertically upward through the packing 36 is brought into contact with the liquid supplied by the pump 30. The liquid may typically be water having a pH of about 5 to 9, more typically a pH of 5.5 to 7.5. A liquid of such pH is very efficient to capture, for example, sulphur dioxide, SO₂, from the flue gas FG.

To maintain the pH at a desired level in the condensing stage 10 an alkaline substance may be added to the liquid. It is preferred that the liquid circulating in the condensing stage 10 is a clear liquid, and not a slurry. An alkaline substance is added from a source 38 to the liquid of the condensing stage 10 via a supply pipe 40 fluidly connected to the circulation pipe 32. A pH-meter 42 measuring the pH of the liquid circulating in the circulation pipe 32 controls the supply of alkaline substance from the source 40. Preferably, the alkaline substance which is stored in the storage 38 and which is utilized for controlling the pH of the cooling liquid circulating in the condensing stage 10 has a solubility in water, at a temperature of 20°C, of at least 50 g/litre, more preferably at least 100 g/litre at 20°C. Examples of suitable alkaline substances include sodium hydroxide (NaOH), potassium hydroxide (KOH), sodium carbonate (Na₂CO₃), and sodium bicarbonate (NaHCO₃). Often, the most preferred alkaline substance is sodium hydroxide (NaOH).

A heat exchanger 44 is arranged for cooling the liquid circulating in the circulation pipe 32. The heat exchanger 44 may be connected to, for example, a boiler feed water heater, a district heating system, or some other system where there is a need for heat. Hence, the heat exchanger 44 cools the liquid circulating in the circulating pipe 32 and recovers heat for use in another system, where there is a need for the heat.

The cooled liquid circulating in the pipe 32, downstream of the heat exchanger 44, is forwarded to the liquid distributor 34 and is brought into contact with the flue gas FG inside the packing 36 of the condensing stage 10. As an effect of such contact the flue gas FG will be cooled to a temperature which is lower than that temperature at which water vapor starts to condense from the flue gas FG. Hence, inside the packing 36 at least a portion of a water vapor content of the flue gas FG will condense and form liquid water. This means that liquid water is continuously added to the liquid circulating in the condensing stage 10. To compensate for this liquid is drained from the condensing stage 10 via a drain pipe 46. The drained liquid, containing condensed water and captured SO₂, may be forwarded to a water treatment plant (not shown) for being cleaned. Optionally at least a portion of the liquid drained from the condensing stage 10 may be forwarded to the scrubbing stage 8 and supplied, via pipe 26, as make-up liquid.

The at least partially cleaned flue gas FG moves vertically upwards from the condensing stage 10 and leaves the wet scrubber 1 via the outlet 6.

An upper mist eliminator 48 may be arranged downstream of the condensing stage 10 to remove at least a portion of liquid droplets that are entrained with the flue gas FG to avoid that such liquid droplets leave the wet scrubber 1. An intermediate mist eliminator 50 may be arranged between the scrubbing stage 8 and the condensing stage 10 to remove at least a portion of liquid droplets that are entrained with the flue gas FG from the scrubbing stage 8 to avoid that such liquid droplets, having a low pH, enter the condensing stage 10. One example of a mist eliminator type that can be used as the upper and intermediate mist eliminators 48, 50 is the Sulzer Mellachevron mist eliminators, available from Sulzer Chemtech AG, Winterthur, CH.

The inlet 4 comprises a horizontal inlet duct 52. The inlet duct is arranged for a horizontal flow of the flue gas FG entering the wet scrubber 1. The inlet duct 52 has an upper wall 54, and a lower wall 56. The lower wall 56 connects to the scrubbing tower 2 in a point 58 which is located above a liquid level LV of the liquid in the tank 12. The upper wall 54 connects to the scrubbing tower 2 in a point 60. The packing 22 of the scrubbing stage 8 has an underside 62. The point 60 is often located at a lower vertical level than the underside 62 of the packing 22. The vertical distance VD from the point 60 and up to the underside 62 is very short. Typically the distance VD would be less than 50 cm, and more preferably less than 30 cm. It is also possible that the vertical distance VD is negative, i.e., that the underside 62 is located on a lower vertical level than the point 60. Such negative distance VD could be in the range of 0 to -10 cm, more prefarably in the range of 0 to -5 cm. Hence, the underside 62 could be located from 10 cm, preferably 5 cm, vertically below the point 60, and up to 50 cm, preferably 30 cm, vertically above the point 60. Most preferably, the distance VD is 0 to 10 cm, with the underside 62 located 0 to 10 cm vertically above the point 60. The combination of the horizontal inlet duct 52, the packing 22 and the short distance VD provides for efficient and even distribution of the flue gas FG within the horizontal cross-section of the interior 3 of the scrubbing tower 2. Liquid LC having passed through the packing 22 and leaving the packing 22 via the underside 62 thereof will be brought into contact with the flue gas FG entering via the inlet duct 52 and will cool the inlet flue gas FG just below the packing 22.

In accordance with one example, the flue gas FG entering the inlet duct 52 may have a temperature of about 100°C. Upon being brought into contact with the liquid LC, the temperature of the flue gas may be lowered to about 60°C. At this temperature the flue gas FG is saturated with water vapor. The flue gas would have this temperature, 60°C, while passing through the scrubbing stage 8. In the condensing stage 10 the flue gas FG may be brought into contact with a liquid having a temperature, at the liquid distributor 34, of about 20°C. The flue gas FG is thereby, as an effect of being brought into contact with this cool liquid, gradually cooled from about 60°C to about 25°C while passing vertically upwards through the condensing stage 10. At the same time the liquid is heated from a temperature of approximately 20°C at the liquid distributor 34, to a temperature of about 55°C when collected at the liquid collector 28. Hence, heat is transferred from the flue gas FG to the liquid in the condensing stage 10. Furthermore, water vapor is condensed from the flue gas FG and forms liquid water as an effect of the cooling of the flue gas FG to a temperature that is below that temperature at which the flue gas FG is saturated with respect to water vapor.

It will be appreciated that numerous variants of the embodiments described above are possible within the scope of the appended claims.

To summarize, a wet scrubber for capturing gaseous pollutants and recovering heat from a process gas stream comprises the features of claim 1.
a scrubbing stage (8) arranged in the interior (3) of the wet scrubber tower (2) and comprising a structured packing (22) for bringing the process gas stream into contact with a scrubbing liquid for capturing at least one gaseous pollutant from the process gas stream, and
a condensing stage (10) arranged inside the interior (3) of the wet scrubber tower vertically above the scrubbing stage (8) and comprising a structured packing (36) for bringing the process gas stream into contact with a condensing liquid for condensing at least a portion of a water vapor content of the process gas.

While the invention has been described with reference to a number of preferred embodiments, it will be understood by those skilled in the art that various changes may be made and equivalents may be substituted for elements thereof without departing from the scope of the present invention. In addition, many modifications may be made to adapt a particular situation or material to the teachings of the invention without departing from the essential scope thereof. Therefore, it is intended that the invention not be limited to the particular embodiments disclosed as the best mode contemplated for carrying out this invention, but that the invention will include all embodiments falling within the scope of the appended claims. Moreover, the use of the terms first, second, etc. do not denote any order or importance, but rather the terms first, second, etc. are used to distinguish one element from another.

## Claims

1. A wet scrubber for capturing gaseous pollutants and recovering heat from a process gas stream containing water vapor, the wet scrubber (1) comprising:
a wet scrubber tower (2) having an inlet (4) arranged at a lower end (5) thereof, and an outlet (6) arranged at an upper end (7) thereof,
a scrubbing stage (8) arranged in the interior (3) of the wet scrubber tower (2) bringing the process gas stream entering the wet scrubber tower via the inlet (4) into contact with a scrubbing liquid for capturing at least one gaseous pollutant from the process gas stream, and
a condensing stage (10) arranged inside the interior (3) of the wet scrubber tower (2) vertically above the scrubbing stage (8) and comprising a structured packing (36) for bringing the process gas stream into contact with a condensing liquid for condensing at least a portion of a water vapor content of the process gas,
wherein the scrubbing stage (8) and the condensing stage (10) comprise a structured packing (22, 36) to bring the process gas stream in contact with the scrubbing liquid and in contact with the condensing liquid, and
wherein a liquid distributor (34) is provided, which is suitable to supply the condensing liquid of the condensing stage (10) with a pH of 5 to 9,
wherein a liquid distributor (20) is provided, which is suitable to supply the scrubbing liquid of the scrubbing stage (8) with a pH of 0.2 to 3, such that hydrogen chloride (HCL) and/or mercury (Hg) and/or ammonia (NH₃) can be captured from the process gas stream, and
wherein a liquid collector (28) is arranged between the structured packing (22) of the scrubbing stage (8) and the structured packing (36) of the condensing stage (10) for collecting condensing liquid that has passed through the condensing stage (10),
wherein the wet scrubber comprises a circulation pump (30) connected to the liquid collector (28) via a circulation pipe (32),
wherein the circulation pump (30) is arranged to pump condensing liquid from the liquid collector (28) to the liquid distributor (34), wherein the wet scrubber (1) comprises a source (38) for supply of an alkaline substance to the condensing stage (10), a drain pipe (46) for draining liquid from the condensing stage (10) and a pH-meter configured to measure the pH of the liquid circulating in the circulation pipe (32) and to control the supply of alkaline substance from the source (40).

2. A wet scrubber according to claim 1, the inlet further comprising a horizontal inlet duct (52).

3. A wet scrubber according to claim 2, wherein the horizontal inlet duct (52) has an upper wall (54), and a lower wall (56), wherein the upper wall (56) connects to the wet scrubber tower (2) in a point which is located a vertical distance (VD) of less than 50 cm below an underside of the structured packing (22) of the scrubbing stage (8).

4. A wet scrubber according to claim 3, wherein the vertical distance (VD) is 0 to 30 cm.

5. A wet scrubber according to any one of claims 1-4, wherein at least one of the scrubbing stage (8) and the condensing stage (10) comprises a liquid drip tube distributor (20, 34) for distributing the scrubbing liquid over the respective structured packing (22, 36).

6. A wet scrubber according to any one of claims 1-5, wherein an intermediate mist eliminator (50) is arranged between the scrubbing stage (8) and the condensing stage (10).

## Patentansprüche

1. Nasswäscher zum Abscheiden von gasförmigen Schadstoffen und Rückgewinnen von Wärme aus einem Prozessgasstrom, der Wasserdampf enthält, wobei der Nasswäscher (1) Folgendes umfasst:
einen Nasswäscherturm (2) mit einem Einlass (4), der an einem unteren Ende (5) davon angeordnet ist, und einem Auslass (6), der an einem oberen Ende (7) davon angeordnet ist, wobei eine Waschstufe (8) im Innenraum (3) des Nasswäscherturms (2) angeordnet ist, die den Prozessgasstrom, der über den Einlass (4) in den Nasswäscherturm eintritt, mit einer Waschflüssigkeit zum Abscheiden mindestens eines gasförmigen Schadstoffs aus dem Prozessgasstrom in Kontakt bringt, und
eine Kondensationsstufe (10), die innerhalb des Innenraums (3) des Nasswäscherturms (2) vertikal über der Waschstufe (8) angeordnet ist und eine strukturiertes Packung (36) umfasst, um den Prozessgasstrom mit einer Kondensationsflüssigkeit zum Kondensieren mindestens eines Teils eines Wasserdampfgehalts des Prozessgases in Kontakt zu bringen,
wobei die Waschstufe (8) und die Kondensationsstufe (10) eine strukturierte Packung (22, 36) umfassen, um den Prozessgasstrom mit der Waschflüssigkeit in Kontakt zu bringen und mit der Kondensationsflüssigkeit in Kontakt zu bringen, und
wobei ein Flüssigkeitsverteiler (34) bereitgestellt ist, der geeignet ist, die Kondensationsflüssigkeit der Kondensationsstufe (10) mit einem pH-Wert von 5 bis 9 zuzuführen,
wobei ein Flüssigkeitsverteiler (20) bereitgestellt ist, der geeignet ist, die Waschflüssigkeit der Waschstufe (8) mit einem pH-Wert von 0,2 bis 3 zuzuführen, sodass Wasserstoffchlorid (HCL) und/oder Quecksilber (Hg) und/oder Ammoniak (NH₃) aus dem Prozessgasstrom gefangen werden können, und wobei ein Flüssigkeitssammler (28) zwischen der strukturierten Packung (22) der Waschstufe (8) und der strukturierten Packung (36) der Kondensationsstufe (10) zum Sammeln von Kondensationsflüssigkeit angeordnet ist, die durch die Kondensationsstufe (10) geleitet wurde,
wobei der Nasswäscher eine Umwälzpumpe (30) umfasst, die mit dem Flüssigkeitssammler (28) über ein Umwälzrohr (32) verbunden ist,
wobei die Umwälzpumpe (30) ausgelegt ist, Kondensationsflüssigkeit aus dem Flüssigkeitssammler (28) zum Flüssigkeitsverteiler (34) zu pumpen,
wobei der Nasswäscher (1) eine Quelle (38) zum Zuführen eines alkalischen Stoffes zur Kondensationsstufe (10), ein Abflussrohr (46) zum Abfließenlassen von Flüssigkeit aus der Kondensationsstufe (10) und einen pH-Messer umfasst, der konfiguriert ist, den pH-Wert der Flüssigkeit zu messen, die in dem Umwälzrohr (32) umgewälzt wird, und die Zufuhr von alkalischem Stoff aus der Quelle (40) zu steuern.

2. Nasswäscher nach Anspruch 1, wobei der Einlass ferner eine horizontale Einlassleitung (52) umfasst.

3. Nasswäscher nach Anspruch 2, wobei die horizontale Einlassleitung (52) eine obere Wand (54) und eine untere Wand (56) aufweist, wobei die obere Wand (56) den Nasswäscherturm (2) in einem Punkt verbindet, der sich um einen vertikalen Abstand (VD) von weniger als 50 cm unterhalb einer Unterseite der strukturierten Packung (22) der Waschstufe (8) befindet.

4. Nasswäscher nach Anspruch 3, wobei der vertikale Abstand (VD) 0 bis 30 cm beträgt.

5. Nasswäscher nach einem der Ansprüche 1 bis 4, wobei mindestens eine der Waschstufe (8) und der Kondensationsstufe (10) einen Tropfrohrverteiler (20, 34) zum Verteilen der Waschflüssigkeit über der jeweiligen strukturierten Packung (22, 36) umfasst.

6. Nasswäscher nach einem der Ansprüche 1 bis 5, wobei ein dazwischenliegender Tropfenabscheider (50) zwischen der Waschstufe (8) und der Kondensationsstufe (10) angeordnet ist.

## Revendications

1. Épurateur humide servant à capturer des polluants gazeux et récupérer de la chaleur à partir d'un courant de gaz de procédé contenant de la vapeur d'eau, l'épurateur humide (1) comprenant :
une tour d'épurateur humide (2) ayant une entrée (4) disposée à une extrémité inférieure (5) de celle-ci, et une sortie (6) disposée à une extrémité supérieure (7) de celle-ci,
un étage d'épuration (8) disposé dans l'intérieur (3) de la tour d'épurateur humide (2) mettant le courant de gaz de procédé entrant dans la tour d'épurateur humide par l'entrée (4) en contact avec un liquide d'épuration pour capturer au moins un polluant gazeux issu du courant de gaz de procédé, et
un étage de condensation (10) disposé dans l'intérieur (3) de la tour d'épurateur humide (2) verticalement au-dessus de l'étage d'épuration (8) et comprenant un garnissage structuré (36) pour mettre le courant de gaz de procédé en contact avec un liquide de condensation pour condenser au moins une partie d'une teneur en vapeur d'eau du gaz de procédé,
dans lequel l'étage d'épuration (8) et l'étage de condensation (10) comprennent un garnissage structuré (22, 36) pour mettre le courant de gaz de procédé en contact avec le liquide d'épuration et en contact avec le liquide de condensation, et
dans lequel il est prévu un distributeur de liquide (34), qui est approprié pour fournir le liquide de condensation de l'étage de condensation (10) avec un pH de 5 à 9,
dans lequel il est prévu un distributeur de liquide (20), qui est approprié pour fournir le liquide d'épuration de l'étage d'épuration (8) avec un pH de 0,2 à 3, de telle sorte que le chlorure d'hydrogène (HCl) et/ou le mercure (Hg) et/ou l'ammoniac (NH₃) peuvent être capturés à partir du courant de gaz de procédé, et
dans lequel un collecteur de liquide (28) est disposé entre le garnissage structuré (22) de l'étage d'épuration (8) et le garnissage structuré (36) de l'étage de condensation (10) pour collecter le liquide de condensation qui a traversé l'étage de condensation (10),
dans lequel l'épurateur humide comprend une pompe de circulation (30) raccordée au collecteur de liquide (28) par un tuyau de circulation (32),
dans lequel la pompe de circulation (30) est agencée pour pomper le liquide de condensation depuis le collecteur de liquide (28) jusqu'au distributeur de liquide (34),
dans lequel l'épurateur humide (1) comprend une source (38) pour la fourniture d'une substance alcaline à l'étage de condensation (10), un tuyau de purge (46) pour purger le liquide provenant de l'étage de condensation (10) et un pH-mètre configuré pour mesurer le pH du liquide circulant dans le tuyau de circulation (32) et pour réguler la fourniture de substance alcaline depuis la source (40).

2. Épurateur humide selon la revendication 1, l'entrée comprenant en outre une conduite d'entrée horizontale (52).

3. Épurateur humide selon la revendication 2, dans lequel la conduite d'entrée horizontale (52) a une paroi supérieure (54) et une paroi inférieure (56), la paroi supérieure (56) étant reliée à la tour d'épurateur humide (2) en un point qui est situé à une distance verticale (VD) de moins de 50 cm au-dessous d'une face inférieure du garnissage structuré (22) de l'étage d'épuration (8).

4. Épurateur humide selon la revendication 3, dans lequel la distance verticale (VD) est de 0 à 30 cm.

5. Épurateur humide selon l'une quelconque des revendications 1 à 4, dans lequel l'étage d'épuration (8) et/ou l'étage de condensation (10) comprennent un distributeur de liquide à tube d'égouttage (20, 34) pour distribuer le liquide d'épuration sur le garnissage structuré respectif (22, 36).

6. Épurateur humide selon l'une quelconque des revendications 1 à 5, dans lequel un dévésiculeur intermédiaire (50) est disposé entre l'étage d'épuration (8) et l'étage de condensation (10).
